# EUROPEAN PATENT APPLICATION

(11) **EP 1 559 753 A2**
(43) Date of publication of application: **03.08.2005**
(21) Application number: 04030771.2
(22) Date of filing: 24.12.2004
(51) Int. Cl.: C09D 7/12, C09D 5/02, C09D 5/14

(54) **Antibacterial potassium-silicate-based paint containing titanium dioxide in anatase form.**

(30) Priority: 22.01.2004 IT pc20040002
(71) Applicant: Barucco, Ezio, 37138 Verona (VR) (IT)
(72) Inventor: Barucco, Ezio, 37138 Verona (VR) (IT)
(74) Representative: La Ciura, Salvatore

(57) **Abstract**

This invention relates to a photocatalytic paint with an antibacterial and antipollutant effect, designed for use in residential and public buildings, which contains a percentage of an element with photocatalytic activity, in particular a mixture of titanium dioxides in the form of anatase that promotes oxidation-reduction reactions of the pollutants present in the air. In particular it relates to a paint in which the mixture of titanium dioxides chosen has a particle size such that it has a high specific surface area, and which contains a suitable quantity of potassium silicate instead of the common organic binders normally used in paint.

The result is a paint which does not deteriorate with time, and which contains a compound able to eliminate the pollutants present in the air and prevent the blackening characteristic of exposed surfaces.

## Description

This invention relates to a photocatalytic paint with an antibacterial and antipollutant effect, designed for use in residential and public buildings, which contains a percentage of an element with photocatalytic activity, in particular a mixture of titanium dioxides in the form of anatase that promotes oxidation-reduction reactions of the pollutants present in the air. In particular it relates to a paint in which the mixture of titanium dioxides chosen has a particle size such that it has a high specific surface area, and which contains a suitable quantity of potassium silicate instead of the common organic binders normally used in paint.

The result is a paint which does not deteriorate with time, and which contains a compound able to eliminate the pollutants present in the air and prevent the blackening characteristic of exposed surfaces.

Achieving a cleaner environment and better air quality by means of environment-friendly use of products with a photocatalytic construction, sometimes activated by sunlight, is a very interesting solution, which can help to solve the pollution problem without contraindications or additional costs.

In the development of systems and strategies for reducing environmental pollution by means of photocatalysts, titanium dioxide has mainly been used in its most reactive crystallographic form, namely anatase. The different photochemical behaviour of the anatase and rutile forms, which differ in terms of the number of terminal octahedra, has led to the choice of the latter (rutile) to make ordinary paints.

The product to which this patent relates involves the insertion of a titanium dioxide with high specific gravity, in the crystallographic form of anatase with high photochemical activity, into a paint system based on a stabilised inorganic binder and particular additives, instead of systems based on organic binders, which present various problems and deterioration caused by the anatase form.

One of the major problems in the environmental protection industry is the harmful effect of pollutants dispersed in the air and the environment on people and on the surfaces of buildings, monuments and constructions.

In addition to the permanent damage caused by the chemical action of these substances on exposed surfaces, progressive blackening of the surfaces is caused by the action of these pollutants.

A number of techniques have been studied in recent years in an attempt to find a solution to this problem.

For example, cement compositions have been developed which contain a quantity of titanium dioxide dispersed in the mixture used, for example, for plaster or coatings employed in civil buildings, in order to exploit the ability of this material to preserve colour, brightness and whiteness.

Italian patent no. 1,292,378 describes the use of organic additives for the preparation of cementitious compositions which preserve whiteness to a large extent and contain a photocatalyst that oxidises the pollutants present in the environment in the presence of light, air and environmental moisture.

The photocatalyst used is titanium dioxide, while the additives comprise a melamine resin, a cellulose ether, a polymer selected from among ethylene, acrylic and terpolymers, such as an ester of acrylic acid with alcohol, esters of vinyl alcohol with carboxylic acids, and a modified starch.

Italian patent application PC 2003 A 000026 of 30/06/2003 describes a composition for the preparation of coatings and paints with a whitening and anti-smog effect which comprises titanium dioxide in anatase form combined with group IV metals, and in particular iron oxide and magnesium oxide.

However, the above-mentioned patents relate to the preparation of cementitious mortars designed for use as coatings which, in view of their density, are unsuitable for use as paints.

The addition of titanium dioxide to known paints is impractical, because this product causes rapid breakdown of the binders contained in the paint, which is usually organic, leading to deterioration of the entire product.

It would be desirable to have a paint which presents the self-cleaning and anti-smog characteristics of these known coatings together with the fluidity characteristics of paint, which allow easy, rapid application to any kind of surface.

This purpose is achieved by the paint according to the invention, wherein an inorganic material, in particular potassium silicate, is used as binder, and titanium dioxide is used in the composition in the form of a mixture having a particular particle size, so that the titanium dioxide has a very high specific surface area, thus guaranteeing an effective photocatalytic antipollutant action despite the very low thickness of the layer of paint applied.

The invention will now be described in detail, by way of example but not of limitation, by reference to the following example.

The paint according to the invention consists of a mixture of the following constituents, their percentages in weight being indicated.

| | |
|---|---|
| Mixture of titanium dioxides | 10 to 30% |
| potassium silicate | 10 to 30% |
| silicate stabiliser | 0.1 to 0.9% |
| anti-mould agent | 0.1 to 0.4% |
| hydroxymethylcellulose | 0.1 to 0.6% |
| dispersing agent | 0.1 to 0.6% |
| antifoaming agent | 0.1 to 0.6% |
| ultra-fine carbonate | 5 to 15% |
| various fillers | 5 to 15% |
| filler/extender | 1 to 8% |
| water repellent | 1 to 5% |
| acrylic emulsion | 0 to 6% |
| white spirit | 0 to 2% |
| cellulose fibres | 0 to 1% |
| water | 10 to 35% |

In accordance with a characteristic of the invention, titanium dioxide enters the composition in a mixture having the specific surface area indicated below, which ensures good filling of all the gaps between the particles, thus considerably increasing the surface area of the material with no change in its overall volume.

Specific surface area: from 10 m²/gm to 280 m²/gm.

Various tests have demonstrated that the optimum results are obtained with the composition indicated below, in which the percentages are expressed in weight.

| | |
|---|---|
| Mixture of titanium dioxides | 20% |
| potassium silicate | 20% |
| silicate stabiliser | 0.3% |
| anti-mould agent | 0.1% |
| hydroxymethylcellulose | 0.1% |
| dispersing agent | 0.2% |
| antifoaming agent | 0.3% |
| ultra-fine carbonate | 10% |
| various fillers | 10% |
| filler/extender | 5% |
| water repellent | 3% |
| acrylic emulsion | 6% |
| white spirit | 1% |
| cellulose fibres | 0.5% |
| water | 23.5% |

In order to prepare the paint the constituents are mixed in water under continual agitation, until the end product is obtained.

The paint according to the invention can have numerous applications.

For example, it could be used to paint the surfaces of tunnels, or buildings overlooking high-traffic areas where there is a high percentage of pollutants, performing its function in such a way as to prevent deterioration of the surface and promote rapid oxidation of the pollutants in the air.

It is also indicated for use inside residential buildings, where volatile organic compounds (VOC) may be present.

The paint could also be used for the walls of hospital and surgery structures or premises open to the public, such as swimming pools, cinemas and gymnasiums, which must be kept sterile.

An expert in the field could devise various modifications and variations, all of which should be deemed to fall within the ambit of this invention.

## Claims

1. Paint with an antibacterial and anti-smog effect, **characterised in that** it includes a suitable quantity of titanium dioxide in anatase form.

2. Paint as claimed in claim 1, **characterised in that** the titanium dioxide enters the composition in the form of a mixture with a high specific surface area of 10 m²/gm to 280 m²/gm

3. Paint as claimed in claim 1 or 2, **characterised in that** potassium silicate is used as binder.

4. Paint as claimed in claim 3, **characterised in that** titanium dioxide enters the composition in the percentage of between 10% and 30%.

5. Paint as claimed in claim 4, **characterised in that** potassium silicate enters the composition in the percentage of between 10% and 30%.

6. Paint with an antibacterial and anti-smog effect, **characterised in that** it has the following composition:
| | |
|---|---|
| Mixture of titanium dioxides | 10 to 30% |
| potassium silicate | 10 to 30% |
| silicate stabiliser | 0.1 to 0.9% |
| anti-mould agent | 0.1 to 0.4% |
| hydroxymethylcellulose | 0.1 to 0.6% |
| dispersing agent | 0.1 to 0.6% |
| antifoaming agent | 0.1 to 0.6% |
| ultra-fine carbonate | 5 to 15% |
| various fillers | 5 to 15% |
| filler/extender | 1 to 8% |
| water repellent | 1 to 5% |
| acrylic emulsion | 0 to 6% |
| white spirit | 0 to 2% |
| cellulose fibres | 0 to 1% |
| water | 10 to 35% |
wherein the various percentages are indicated in weight.

7. Paint as claimed in claim 6, **characterised in that** it has the following composition, wherein the various percentages are indicated in weight.
| | |
|---|---|
| Mixture of titanium dioxides | 20% |
| potassium silicate | 20% |
| silicate stabiliser | 0.3% |
| anti-mould agent | 0.1% |
| hydroxymethylcellulose | 0.1% |
| dispersing agent | 0.2% |
| antifoaming agent | 0.3% |
| ultra-fine carbonate | 10% |
| various fillers | 10% |
| filler/extender | 5% |
| water repellent | 3% |
| acrylic emulsion | 6% |
| white spirit | 1% |
| cellulose fibres | 0.5% |
| water | 23.5% |
